# EUROPÄISCHE PATENTANMELDUNG

(11) **EP 3 932 862 A1**
(43) Veröffentlichungstag der Anmeldung: **05.01.2022**
(21) Anmeldenummer: 20183456.1
(22) Anmeldetag: 01.07.2020
(51) Int. Cl.: C01B 32/194, C01B 32/198

(54) **FUNKTIONALISIERTES GRAPHEN, VERFAHREN ZUR HERSTELLUNG EINES FUNKTIONALISIERTEN GRAPHENS UND DESSEN VERWENDUNG**

(71) Anmelder: Evonik Operations GmbH, 45128 Essen (DE)
(72) Erfinder: LEICH, Valeri, 47198 Duisburg (DE); HÖNIG, Jonas, 45147 Essen (DE); TEICHMANN, Julian, 60438 Frankfurt am Main (DE); BLANK-SHIM, Silvia, 63743 Aschaffenburg (DE); SCHUMANN, Stefan, 42897 Remscheid (DE); BREUERS, Verena, 45721 Haltern am See (DE); STENNER, Patrik, 63452 Hanau (DE)
(74) Vertreter: Evonik Patent Association

(57) **Zusammenfassung**

Die vorliegende Erfindung betrifft ein Verfahren zur Funktionalisierung von Graphen-Material, indem Graphen-Material mit zumindest einem Silan durchmischt wird, sowie das funktionalisierte Graphen-Material selbst und dessen Verwendung.

## Beschreibung

Die vorliegende Erfindung betrifft ein Verfahren zur Funktionalisierung von Graphen-Material, das funktionalisierte Graphen-Material selbst und dessen Verwendung.

Über Graphen, dessen Herstellung, Eigenschaften und Anwendungen finden sich in der Fachliteratur ausführliche Abhandlungen, z.B. bei Römpp online, https://roempp.thieme.de/lexicon/RD-07-02758.

Analog zum Graphit ist jedes Kohlenstoff-Atom im Graphen über eine Sigma-Bindung mit 3 Nachbaratomen kovalent verknüpft. Der C,C-Bindungsabstand beträgt 142 pm. Die Atome sind sp²-hybridisiert, die Sigma-Bindungen liegen in einer Ebene. Demnach besitzt Graphen eine planare Struktur. An jedem Atom verbleibt ein teilgefülltes p_{z}-Orbital. Diese p_{z}-Orbitale stehen orthogonal zur Bindungsebene und formen ein delokalisiertes Pi-Elektronensystem, welches maßgeblich die elektronischen Eigenschaften des Graphens bestimmt.

Kristallographisch kann Graphen durch zwei äquivalente Subgitter mit den Vektoren der Einheitszelle a̅ = b̅ = 0,246 nm beschrieben werden, welche einen Zwischenwinkel von 60° aufspannen. Die Einheitszelle besteht aus 2 Kohlenstoff-Atomen jeweils an den Positionen (0, 0) und (a/3, 2b/3). Die Atomdichte beträgt damit 38,2 nm⁻².

Unter "Graphen-Material" wird im Rahmen der Erfindung Material oder Materialien gemäß ISO/TS 80004-13, nämlich
- Graphen,
- Graphenic carbon materials,
- Mono-, Bi- and Trilayer graphene,
- Epitaxial graphene,
- Exfoliated graphene,
- Few-layer graphene,
- Multi-layer graphene,
- Few-layered nanoribbons,
- Graphene nanoplate,
- Graphene nanoplatelet,
- Graphene nanosheet,
- Graphene microsheet,
- Graphene nanoflakes,
- Graphene nanoribbon,
- Graphene oxide,
- Graphene oxide nanosheet,
- Multi-layer graphene oxide,
- Graphene quantum dot,
- Graphite,
- Graphite nanoplate,
- Graphite nanosheet,
- Graphite nanoflake,
- Graphite oxide,
- Reduced graphene oxide,
oder ein Gemisch dieser Materialien verstanden.

Graphen-Materialien kommen in einer Vielzahl technischer Bereiche zur Anwendung.

Beispielsweise stellt CN 109504318 A ein Verfahren vor, für gedruckte flexible Schaltungen Polystyrolfilme mittels oxidiertem Graphen und Aluminiumoxid zu modifizieren.

Die Patentanmeldung WO 2018019905 A1 offenbart ein Verfahren, ein Metallsubstrat mittels einer Bindesubstanz mit einer oder wenigen Monolagen Graphen zu beschichten.

In WO 2015055252 A1 werden Vinylsilane offenbart, die in Graphen-Materialien aufweisenden Gummimischungen zum Beispiel bei der Herstellung von Reifen eingesetzt werden können.

Staub und Bakterien abweisende wässrige Beschichtungsmaterialien für Glastüren werden in CN 104342003 A vorgestellt. Bei der Herstellung dieser Beschichtungsmaterialien wird unter anderem Graphen eingesetzt.

Wie mechanische Eigenschaften von Asphalt durch eine Polyesterfasern und Graphen enthaltende Zusammensetzung verbessert werden können, lehrt CN 105056879 A.

Bei der Herstellung vulkanisierter Gummimischungen können Konzentrate eingesetzt werden, die neben anderen Materialien Graphen und Sulfonamide enthalten. Solche Konzentrate und deren Herstellverfahren sind in CN 107459717 A offenbart.

Auch zur Fäulnisverhütung in Baustoffen wird Graphen-Material eingesetzt. Entsprechend der Lehre von CN 108947394 A wird in Portland Zement neben anderen Materialien modifiziertes Graphenoxid eingearbeitet.

WO 2019145307 A1 offenbart polymere, anorganische Nano-Partikel aufweisende Zusammensetzungen und deren Verwendung in Gleit- und Schmiermitteln auf metallischen Flächen. Als Nano-Partikel wird u.a. Graphen eingesetzt.

Graphen-Materialien sind kommerziell als Pulver erhältlich und besitzen oft sehr niedrige Schüttdichten, etwa im Bereich zwischen 2 und 400 g/l. Neben den geringen Schüttdichten weisen die meisten Graphen-Materialien auch eine schlechte Rieselfähigkeit auf bzw. entwickeln einen hohen Staubgehalt beim Schütten. Dies führt zu schlechter Handhabbarkeit, Problemen bei Einwaage und Dosierung und ist auch unter Gesichtspunkten des Umweltschutzes und der Arbeitssicherheit kritisch zu betrachten.

Die schlechte Handhabbarkeit zeigt sich beispielsweise bei der Einarbeitung der Pulver in elastomeren Systemen, wie es beim Kneten von Gummi der Fall ist: Um einen guten gefüllten Gummi-Compound herzustellen, kommt es auf den richtigen Zeitpunkt und die Zeitdauer der Einarbeitung von pulvrigen Füllstoffen an. Diese werden mittels Trichter in die Mischkammer geschüttet und dann durch einen pneumatischen Stempel in Richtung sich drehender Walzen gedrückt.

Zwar sind im Stand der Technik Methoden bekannt, die Dispersion von Graphen-Materialien oder auch anderen Füllstoffen in Matrixsystemen mittels Silanen oder Siloxanen zu verbessern oder zu ermöglichen. Dazu werden zumeist Silane in unterschüssiger Menge eingesetzt.

Es besteht jedoch weiterhin Bedarf an einer technischen Vorgehensweise, wie bei der Verwendung von pulverförmigem Graphen-Material dabei entstehende Mengen an Staub zu handhaben oder zu vermeiden sind. Denn einerseits führen Stäube zu Verunreinigungen und erschweren die Messung der Füllstoffmenge, die tatsächlich in das Matrixsystem eingebracht ist. Andererseits müssen Stäube aus Gründen der Arbeitssicherheit und des Umweltschutzes abgesaugt bzw. entsorgt werden.

Des Weiteren vergrößern die Stäube und die im Allgemeinen geringe Schüttdichte des Graphen-Materials den Aufwand, es in das gewünschte Matrixsystem einzubringen. Entsprechende Probleme treten z.B. bei der Herstellung eines mit Graphen-Material gefüllten thermoplastischen Compounds in einem Extruder auf. Aus den besagten Gründen kann ein zeitkritisches Zuführen von pulverförmigem Graphen-Material während des Herstellprozesses thermoplastischer Systeme nicht oder nur schwer gewährleistet werden.

Aufgabe der vorliegenden Erfindung war es daher, Graphen-Material zu einem Produkt mit einer verbesserten Fließfähigkeit und/oder vergrößerten Schüttdichte aufzubereiten, bei dessen Verarbeitung weniger Staub anfällt, und das somit in kommerziell interessante Matrixsysteme besser eingearbeitet werden kann.

Überraschend wurde gefunden, dass mit Silan funktionalisierte Graphen-Materialien diese Aufgabe lösen.

Gegenstand der Erfindung ist ein Verfahren zur Funktionalisierung von Graphen-Material, welches dadurch gekennzeichnet ist, dass Graphen-Material mit zumindest einem Silan zumindest teilweise umgesetzt wird, wobei das zumindest eine Silan die Struktur Y-Si(OR¹)(OR²)(OR³) hat und Y ein verzweigter oder unverzweigter Alkyl-, Olefin- oder aromatischer Rest, eine Kombination dieser Reste, oder eine funktionelle organische Gruppe,
ausgewählt aus Carboxy-, Carbonyl-, Hydroperoxycarbonyl-, Halogenyl-, Sulfo-, Sulfino-, Sulfeno-, Cyan-, Formyl-, Oxo-, Thioxo-, Hydroxy-, Amino-, Imino-, Hydrazino-, Epoxy-, Sulfanyl-, Fluoro-, eine Kombination dieser Gruppen, oder eine Kombination aus Alkyl-, Olefin- oder aromatischem Rest und dieser funktionellen organischen Gruppe, ist, und
R¹, R², R³ verzweigte oder unverzweigte Alkyl-, Olefin- oder aromatische, paarweise gleiche oder ungleiche Reste sind, und die zumindest teilweise Umsetzung während einer Durchmischung des oder der Silane mit dem Graphen-Material durchgeführt wird.

Nach der Durchführung des erfindungsgemäßen Verfahrens ist Graphen-Material in Form eines Granulates erhalten.
Unter einem Granulat wird im Rahmen der Erfindung eine Anhäufung asymmetrischer Aggregate aus Pulverpartikeln verstanden, angelehnt an die Definition bei Römpp online, https://roempp.thieme.de/35IDR. Die Aggregate weisen unebene Oberflächen und keine harmonisch geometrische Form auf. Als Charakterisierung von Granulaten können die Bestimmung der Schüttdichte nach DIN-ISO 697: 1984-01 und die Bestimmung des Schüttwinkels nach DIN ISO 4324: 1983-12 herangezogen werden.

Das erfindungsgemäße Verfahren hat den Vorteil, sehr einfach durchführbar zu sein und damit Graphen-Material zu erzielen, das im Vergleich zu konventionellen Graphen-Materialien weniger staubt und deutlich rieselfähiger ist. Somit wird ein Mehrwert beim Dispergieren in verschiedenen Matrixsystemen, unabhängig von der Dispergiermethode, realisiert.

Die Erfindung wird im Folgenden näher erläutert.

Es kann vorteilhaft sein, in dem erfindungsgemäßen Verfahren zwei oder mehr Silane einzusetzen, deren Y oder R¹, R², R³ paarweise gleich oder ungleich sind.

Vorzugsweise kann das zumindest eine Silan ausgewählt sein aus 3-Glycidyloxypropyltriethoxysilan, abgekürzt GLYEO, 3-Aminopropyltriethoxysilan, abgekürzt AMEO, Glycidyloxypropyltrimethoxysilan, abgekürzt GLYMO, 3-Aminopropyltrimethoxysilan, abgekürzt AMMO, oder einem Gemisch aus diesen Silanen.

Weiterhin bevorzugt kann das zumindest eine Silan ausgewählt sein aus Bis(triethoxysilylpropyl)tetrasulfid, Bis(triethoxysilylpropyl)disulfid, 3-Thiocyanatopropyltriethoxysilan, Gamma-aminopropyltriethoxysilan, Dynasylan^{®} SIVO 214, Gamma-aminopropyltrimethoxysilan,
Bis-(triethoxysilylpropyl)amin, Bis-(trimethoxysilylpropyl)amin, N-beta-(Aminoethyl)-gammaaminopropyltrimethoxysilan, N-beta-(Aminoethyl)-gammaaminopropyltrimethoxysilan, Triaminofunctional Silan, Benzylamino-Silan (50 % in MeOH), Benzylamino-Silan (60 % in Wasser), Vinylbenzylamino-Silan (42 % ~in MeOH), Vinylbenzylamino-Silan (40 % in Wasser), Polyazamide Silan (53 % in MeOH), Quaternary amine Silan (48 % in Wasser), Methacrylamido-Silan (40 % in Wasser), Gamma-aminopropylsilanol (40 % in Wasser),
Gamma-aminopropylsilanol (88 % in Wasser), Vinyl-aminoalkylsilanol (60 % in Wasser),
VPS 1208, Triaminofunctional Silanol (40 % in Wasser), 3-Ureidopropyltrimethoxysilan, 3-Ureidopropyltriethoxsilan (50 % in Methanol), 3-Ureidopropyltriethoxysilan (mit 10 % EtOH), Gamma-glycidoxypropyltrimethoxysilan, Gamma-glycidoxypropyltriethoxysilan, Gammamethacryloxypropyltrimethoxysilan (MEMO), Gamma-methacryloxypropyltriethoxysilan (MEEO), Vinyltrimethoxysilan (VTMO), Vinyltriethoxysilan (VTEO), Oligomeric Alkylsilan (50 % in Wasser), Polyether functional trimethoxysilan, Vinyltrimethoxysilan (VTMO), 3-Methacryloxypropyltriethoxysilan (MEEO), 3-Methacryloxypropyltrimethoxysilan (MEMO), Octyltrimethoxysilan (OCTMO), Octyltriethoxysilan (OCTEO), oder einer Kombination dieser Silane.
Alle diese vorzugsweise einsetzbaren Silane sind erhältlich bei *Evonik Resource Efficiency GmbH, Rodenbacher Chaussee 4 in 63457 Hanau, Deutschland.*

Besonders bevorzugt kann das Silan ausgewählt sein aus 3-Glycidyloxypropyltriethoxysilan (GLYEO), 3-Aminopropyltriethoxysilan (AMEO), Glycidyloxypropyltrimethoxysilan (GLYMO), 3-Aminopropyltrimethoxysilan (AMMO) oder einem Gemisch aus diesen Silanen.
Ganz besonders bevorzugt kann Glycidyloxypropyltriethoxysilan (GLYEO) eingesetzt werden.

In dem erfindungsgemäßen Verfahren kann die Summe der Massenanteile des zumindest einen Silans im Bereich von 0,1 bis 70 Gew.-%, vorzugsweise von 5 bis 50 Gew.-%, weiterhin bevorzugt von 25 bis 40 Gew.-%, liegen, wobei die Summe der Massenanteile des oder der Silane und des Graphen-Materials 100 Gew.-% beträgt.
Falls das oder die Silane mit einem Massenanteil von insgesamt 50 Gew.-% eingesetzt wird oder werden, liegt das gravimetrische Verhältnis von 1:1 von Graphen-Material und Silan oder Silanen vor.

Die zumindest teilweise Umsetzung in dem erfindungsgemäßen Verfahren kann bei einer Temperatur im Bereich von 50 °C bis 150 °C, bevorzugt in einem Bereich von 80 °C bis 110 °C durchgeführt werden. Die Temperatur kann weiterhin abhängig von dem zumindest einen Silan, dem Graphen-Material und der Art der Durchmischung eingestellt werden.

Für die Durchmischung in dem erfindungsgemäßen Verfahren kann vorzugsweise ein Mischgranulator, ein Gefäß mit Mahlkugeln, eine Kugelmühle, ein Drei-Walzen-Stuhl, ein Rührer oder ein mit Schaufeln ausgestattetes Gefäß eingesetzt werden.
Durch die Funktionalisierung in dem erfindungsgemäßen Verfahren wird ohne Kompaktierung ein Granulat erzielt, welches eine höhere Schütt- und Stampfdichte als das nicht funktionalisierte Graphen-Material besitzt. Dies ist überraschend, da bei konventionellen Methoden, Granulate zu erzeugen, im Allgemeinen kompaktiert werden muss. Doch kann es vorteilhaft sein, in dem erfindungsgemäßen Verfahren anhand der Durchmischung eine Kompaktierung vorzunehmen, beispielsweise, indem ein Drei-Walzen-Stuhl eingesetzt wird.
In dem beanspruchten Verfahren wird ohne oder mit Kompaktierung ein Granulat erhalten, falls das zumindest eine Silan in einem Massenanteil von mindestens 5 Gew.-%, besonders bevorzugt von mindestens 10 Gew.-% eingesetzt wird, weiterhin bevorzugt das zumindest eine Silan in einem Massenanteil von 0,1 bis 70 Gew.-%, vorzugsweise von 5 bis 50 Gew.-%, weiterhin bevorzugt von 25 bis 40 Gew.-%, liegt, wobei die Summe der Massenanteile des oder der Silane und des Graphen-Materials 100 Gew.-% beträgt.

Weiterhin kann es vorteilhaft sein, vor der Durchmischung das zumindest eine Silan vorzubereiten. Eine solche Vorbereitung wird in den erfindungsgemäßen Beispielen durchgeführt. Anhand dieser Vorbereitung wird eine Vorfunktionalisierung des zumindest einen Silans realisiert. Vorzugsweise kann zu einer Alkohol-Wasser-Mischung, besonders bevorzugt zu einer Ethanol-VE-Wasser-Mischung, ganz besonders bevorzugt zu einer Mischung aus 95 Vol.-% Ethanol und 5 Vol.-% VE-Wasser das zumindest eine Silan in einer definierten Menge dazugegeben werden und die so erhaltene Zubereitung während einer gewissen Zeitdauer, vorzugsweise von 1 bis 100 min, besonders bevorzugt etwa 10 min, bei Raumtemperatur gerührt werden.

Es kann weiterhin vorteilhaft sein, VE-Wasser mittels einer Säure, vorzugsweise HCl, auf einen definierten pH-Wert einzustellen, vorzugsweise auf einen pH-Wert im Bereich von 4,5 bis 5,5. Anschließend kann dieser Zubereitung das zumindest eine Silan in einer definierten Menge dazugegeben und die so erhaltene Zubereitung während einer gewissen Zeitdauer, vorzugsweise von 1 bis 100 min, besonders bevorzugt etwa 10 min, bei Raumtemperatur gerührt werden.

Gleichfalls kann es vorteilhaft sein, zu Ethanol (p.a.) das zumindest eine Silan in einer definierten Menge zu geben und die so erhaltene Zubereitung während einer gewissen Zeitdauer, vorzugsweise von 1 bis 100 min, besonders bevorzugt etwa 10 min, bei Raumtemperatur zu rühren.

In allen diesen Optionen kann es vorteilhaft sein, anschließend eine klare Phase zu erhalten.

Die bevorzugten Vorbereitungen unterscheiden sich von der herkömmlichen Vorgehensweise dadurch, dass bei der Vorfunktionalisierung lediglich Wasser oder ein Wasser-Ethanol-Gemisch eingesetzt wird.

Unter "Raumtemperatur" wird im Rahmen der Erfindung eine Temperatur von 20 °C verstanden.

Wie bereits erwähnt, wird mit dem erfindungsgemäßen Verfahren funktionalisiertes Graphen-Material erzielt, das eine gegenüber konventionellem Graphen-Material erhöhte Schütt- und Stampfdichte aufweist. Außerdem fällt bei dessen Verarbeitung deutlich weniger Staub an, wie in den Beispielen gezeigt wird. Insbesondere lässt sich das erfindungsgemäß erhaltene funktionalisierte Graphen-Material besser in diverse Matrixsysteme einarbeiten. Überdies können solche Systeme mit dem erfindungsgemäß erhaltenen funktionalisierten Graphen-Material schneller und/oder unkomplizierter beschickt werden.
Es ist weiterhin überraschend, dass sich die Fließfähigkeit des erfindungsgemäß funktionalisierten Graphen-Materials im Vergleich zu nicht funktionalisiertem Graphen-Material überraschend wenig geändert hat oder besser ist.

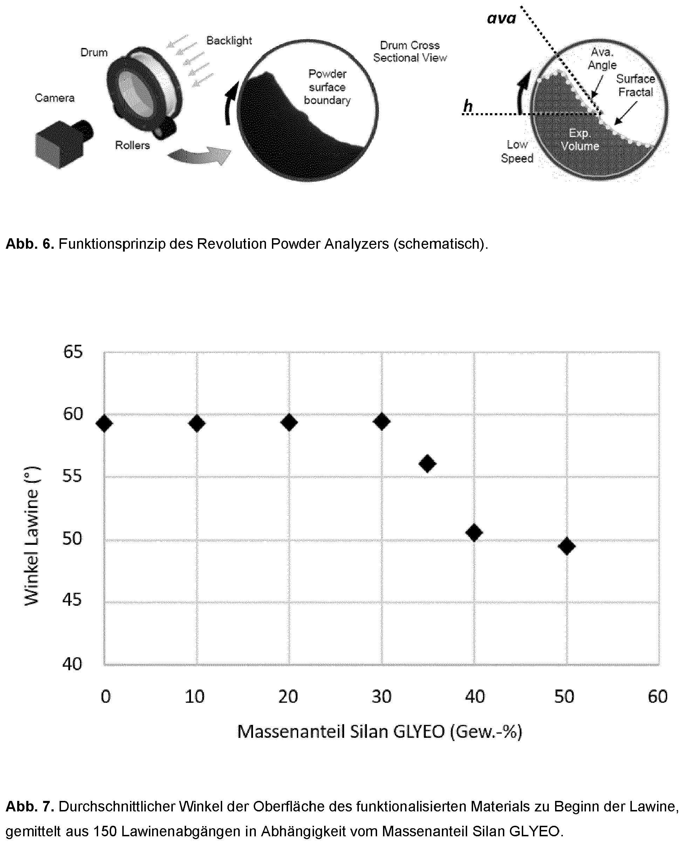

Die Fließfähigkeit wird im Rahmen der Erfindung ermittelt, indem, wie in **Abbildung 6** schematisch gezeigt, eine definierte Menge in eine Trommel gegeben wurde und die Trommel in eine gleichmäßige Drehung versetzt wird. Anschließend wird mittels Kamera bestimmt, ab welchem Winkel das Material Lawinen bildet. Die Richtung der Drehung ist in **Abbildung 6** jeweils durch einen Pfeil dargestellt. Je kleiner dieser im Rahmen der Erfindung sogenannte "Lawinenwinkel" (*ava,h*) der von den Partikeln gebildeten Oberfläche zur Horizontalen (h) zum Zeitpunkt des Abgangs der Lawine ist, desto größer gleichbedeutend mit besser ist die Fließfähigkeit des Materials. Der Lawinenwinkel von (*ava*) zur Horizontalen (h) wird in der mathematisch positiven Richtung gemessen. Einzelheiten zur Bestimmung der Fließfähigkeit können beispielsweise dem Aufsatz von Amado, "Advances in SLS powder characterization", 22nd Annual International Solid Freeform Fabrication Symposium - An Additive Manufacturing Conference, SFF, 2011, pp. 438-452, entnommen werden.

Es kann vorteilhaft sein, in dem erfindungsgemäßen Verfahren das zumindest eine Silan in einem Massenanteil mindestens 30 Gew.-% einzusetzen. Ab solcher Massenanteile wird gefunden, dass der Lawinenwinkel mit steigendem Anteil des zumindest einen Silans sinkt. Vorzugsweise können Massenanteile des zumindest einen Silans im Bereich von 30 bis 70 Gew.-%, vorzugsweise von 30 bis 50 Gew.-%, weiterhin bevorzugt von 30 bis 40 Gew.-%, eingesetzt werden, wobei die Summe der Massenanteile des oder der Silane und des Graphen-Materials 100 Gew.-% beträgt.

Gegenstand der Erfindung daher ebenfalls ein funktionalisiertes Graphen-Material, erhalten nach dem erfindungsgemäßen Verfahren.

Vorzugsweise weist das erfindungsgemäße oder erfindungsgemäß erhaltene funktionalisierte Graphen-Material eine Schüttdichte von 300 g/l bis 900 g/l, weiterhin vorzugsweise von 500 g/l bis 800 g/l, und/oder eine Stampfdichte von 300 g/l bis 900 g/l, vorzugsweise von 500 g/l bis 800 g/l, und/oder eine Verringerung der Staubentwicklung um 50 % bis 80 %, vorzugsweise um 55 % bis 75 % auf.

Die Schütt- bzw. Stampfdichte von erfindungsgemäß funktionalisiertem und nicht funktionalisiertem Graphen-Material werden im Rahmen der Erfindung gemäß DIN 53912 bzw. DIN/ISO 787 bestimmt.

Die Staubentwicklung wird im Rahmen der Erfindung mit einem Staubentwicklungsgerät Heubach Dustmeter Typ I im Rotationsverfahren gemäß DIN 55992 bestimmt.

Resultat der Bestimmung der Staubentwicklung war in den Beispielen die Masse an Staub, die jeweils bei unfunktionalisiertem Graphen-Material und erfindungsgemäß funktionalisiertem Graphen-Material entstand. Die Verringerung der Staubentwicklung ist im Rahmen der Erfindung der Quotient aus
- der Differenz zwischen der gemäß DIN 55992 bestimmten Masse an Staub des nicht funktionalisierten Graphen-Materials und der Masse an Staub des erfindungsgemäß funktionalisierten Graphen-Materials und
- der Masse an Staub des nicht funktionalisierten Graphen-Materials, angegeben in %.

Durch die mit dem Massenanteil des zumindest einen Silans unveränderte oder verbesserte Fließfähigkeit als besagten weiteren Vorteil des erfindungsgemäßen oder erfindungsgemäß erhaltenen funktionalisierten Graphen-Materials kann dieses Material in zumindest den gleichen Anwendungsgebieten eingesetzt werden, wie das unfunktionalisierte, jedoch ist es einfacher prozessierbar und weist die besagten Nachteile des konventionellen Graphen-Materials nicht auf.

Daher ist gleichfalls Gegenstand die Verwendung des erfindungsgemäßen oder erfindungsgemäß erhaltenen funktionalisierten Graphen-Materials als Füllstoff, als Korrosionsschutz in Coatings, für Anti-Icing, als Aktivmaterial und/oder Elektrodenmaterial in Batterien, in Kompositmaterialien und/oder Schäumen zur Veränderung von mechanischen, thermischen, elektrischen und tribologischen Eigenschaften sowie des Flammschutzes, in Reifenkautschuk, in Getriebe- und/oder Motorenöl, bei der Metallbearbeitung, in Membranen.

In Reifenkautschuk hat die erfindungsgemäße Verwendung den Vorteil einer Verbesserung der thermischen und/oder elektrischen Eigenschaften sowie des Rollwiderstands, Nassrutschverhaltens und Abriebs. Die beanspruchte Verwendung in Ölen führt zur Verbesserung tribologischer Eigenschaften wie Reibung, Abrieb, Wärmeabtransport.

Vorzugsweise kann das erfindungsgemäße oder erfindungsgemäß erhaltene funktionalisierte Graphen-Material verwendet werden
- in thermoplastischen Kunststoffen, ausgewählt aus Standard-Thermoplaste, vorzugsweise PE, PP, PS, PVC,
- in technischen Thermoplasten, vorzugsweise PET, PMMA, PC, POM, PA,
- in Hochleistungs-Thermoplasten, vorzugsweise PPS, PEEK, PES,
- in Copolymerisaten, Elastomeren, vorzugsweise Silikonen, weiter bevorzugt RTV, HTV, LSR,
- in Polyurethanen, Kautschuken, vorzugsweise SBR, BR, Naturkautschuk,
- in Duromeren, vorzugsweise Polyurethanen, Polyesterharzen, Phenolharzen, Epoxidharzen, Acrylatharzen, Silikonharzen,
- in Lösemitteln, vorzugsweise aprotisch-unpolaren, aprotisch-polaren, protischen Lösemitteln,
- in Ölen, vorzugsweise Mineralölen, Silikonölen, Prozessierölen.

Im Folgenden wird die Erfindung beispielhaft erläutert.

### Beispiel A: Funktionalisierung von Graphen im Kolben.

Das Silan GLYEO wurde vor dessen Einsatz vorbereitet wie folgt:
Eine Ethanol-VE-Wasser-Mischung (95 Vol.-% Ethanol, 5 Vol.-% VE-Wasser) in einer Menge von 3 ppw wurde mittels HCl auf einen pH-Wert in einen Bereich von 4,5 bis 5,5 eingestellt. Anschließend wurde mittels einer Spritze das Silan in einer Menge von 1 ppw vorsichtig dazugegeben und etwa 10 min bei Raumtemperatur gerührt. Damit wurde eine Vorfunktionalisierung des Silans realisiert. Es wurde eine klare Phase erhalten.

Als Graphen-Material wurde Graphenoxid gewählt.
Ein Schaufeln aufweisender Rundhalskolben wurde mit dem Graphenoxid in einer Menge von 4 ppw befüllt und die vorbereitete klare Phase in einer Menge von 4 ppw aufgegeben.
Die teilweise Umsetzung fand am Rotationsverdampfer bei 100 °C und unter einem Druck von 30 hPa während 3 h statt.

Das so erhaltene erfindungsgemäß funktionalisierte Graphen-Material wurde anschließend mit Ethanol (p.a.) mittels einer Soxhlet-Apparatur von überschüssigem Silan gereinigt, über Nacht im Abzug unter Absaugung vorgetrocknet und im Anschluss am Rotationsverdampfer bei 100 °C und bei einem Druck von 30 hPa während 3 h getrocknet.

### Beispiel B: Funktionalisierung von Graphen im Labormischgranulator.

Das Silan GLYEO wurde vor dessen Einsatz vorbereitet wie folgt:
VE-Wasser wurde in einer Menge von 3 ppw mittels HCl auf einen pH-Wert im Bereich von 4,5 bis 5,5 eingestellt. Mittels einer Spritze wurde das Silan in einer Menge von 1 ppw vorsichtig dazugegeben und etwa 10 min bei Raumtemperatur gerührt.
Es wurde eine klare Phase erhalten.

Als Graphen-Material wurde Graphenoxid gewählt.
Ein Labormischgranulator wurde mit diesem Graphen-Material in einer Menge von 4 ppw befüllt und mit 4 ppw der klaren Phase befüllt. Die teilweise Umsetzung fand im Mischgefäß bei 100 °C und einer Umdrehungszahl von 300 rpm während 3 h statt.

Das so erhaltene erfindungsgemäß funktionalisierte Graphen-Material wurde anschließend mit Ethanol (p.a.) mittels einer Soxhlet-Apparatur von überschüssigem Silan gereinigt, über Nacht im Abzug unter Absaugung vorgetrocknet und im Anschluss am Rotationsverdampfer bei 100 °C und bei einem Druck von 30 hPa während 3 h getrocknet.

### Beispiel C: Funktionalisierung von Graphen in einer Kugelmühle.

Das Silan GLYEO wurde vor dessen Einsatz vorbereitet wie folgt:
Ethanol (p.a.) wurde in einer Menge von 3 ppw vorgelegt. Das Silan wurde mittels einer Spritze in einer Menge von 1 ppw vorsichtig dazugegeben und etwa 10 min bei Raumtemperatur gerührt. Es wurde eine klare Phase erhalten.

Als Graphen-Material wurde Graphenoxid gewählt. Dieses Graphen-Material wurde in einer Menge von 4 ppw in das Mahlgefäß einer Kugelmühle gefüllt und 4 ppw der klaren Phase aufgegeben. Zusätzlich wurden 4 ppw Mahlkugeln mit Durchmessern von 2 bis 10 mm dazugegeben. Die teilweise Umsetzung fand in der Kugelmühle bei einer Umdrehungszahl von 600 rpm während 15 min statt.

Das so erhaltene erfindungsgemäß funktionalisierte Graphen-Material wurde anschließend mit Ethanol (p.a.) mittels einer Soxhlet-Apparatur von überschüssigem Silan gereinigt, über Nacht im Abzug unter Absaugung vorgetrocknet und im Anschluss am Rotationsverdampfer bei 100 °C und bei einem Druck von 30 hPa während 3 h getrocknet.

### Beispiel D: Funktionalisierung von Graphen in einem Drei-Walzen-Stuhl.

Das Silan GLYEO wurde vor dessen Einsatz vorbereitet wie folgt:
Ethanol (p.a.) wurde in einer Menge von 3 ppw vorgelegt. Das Silan wurde mittels einer Spritze in einer Menge von 1 ppw vorsichtig dazugegeben und etwa 10 min bei Raumtemperatur gerührt. Es wurde eine klare Phase erhalten.

Als Graphen-Material wurde Graphenoxid gewählt. Dieses Graphen-Material wurde in einer Menge von 4 ppw in ein Becherglas gefüllt und die klare Phase in einer Menge von 4 ppw aufgeben.

Durch Umrühren mit einem Metallspatel wurde die Reaktionsmischung homogenisiert. Anschließend wurde die Mischung langsam und gleichmäßig auf die Walzen eines Dreiwalzenstuhls gestreut. Die Walzen des Stuhls bestanden aus SiC und wurden mittels Ölbad auf 100 °C Öltemperatur und 60 °C gemessene Oberflächentemperatur auf den Walzen thermostatisiert. Die Temperatur wurde mittels Infrarot-Thermometer kontrolliert.

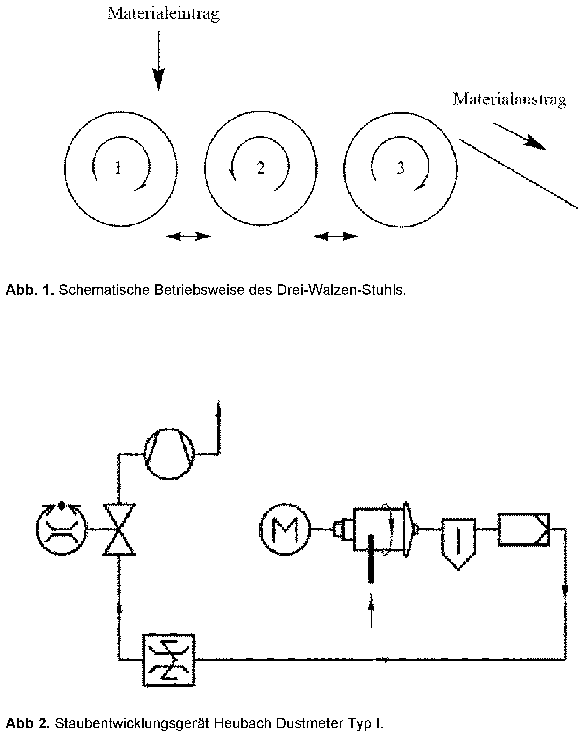

Die Walzen wurden mit unterschiedlichen Umdrehungszahlen und Drehrichtungen betrieben, nämlich die Walze 1 mit einer Umdrehungszahl von 12 rpm, die Walze 2 bei 36 rpm und die Walze 3 bei 110 rpm. Dies ist schematisch in **Abbildung 1** gezeigt.

Zwischen den Walzen wurde ein festgelegter Abstand eingestellt, nämlich zwischen Walze 1 und Walze 2 ein Abstand von 15 µm und zwischen Walze 2 und Walze 3 ein Abstand von 5 µm.

Dabei wurde ein Anpressdruck im Bereich von 1 bis 6 N/mm² realisiert, abhängig von der aufgetragenen Materialmenge. Der Materialaustrag erfolgt über einen an Walze 3 angelegten Abstreifer.

Das so erhaltene erfindungsgemäß funktionalisierte Graphen-Material wurde anschließend mit Ethanol (p.a.) mittels einer Soxhlet-Apparatur von überschüssigem Silan gereinigt, über Nacht im Abzug unter Absaugung vorgetrocknet und im Anschluss am Rotationsverdampfer bei 100 °C und bei einem Druck von 30 hPa während 3 h getrocknet.

### Beispiel E: Bestimmung der Eigenschaften des funktionalisierten Graphens.

### 1) Bestimmung der Staubentwicklung nach DIN 55992-1 (Ausgabe Juni 2006).

Es wurde ein Staubentwicklungsgerät des Typs Heubach Dustmeter Typ I eingesetzt, schematisch gezeigt in **Abbildung 2****.** Die baulichen Einzelheiten dieses Gerätes sind dem Fachmann bekannt.

Als Graphen-Material wurde Graphenoxid gewählt.
Im Rotationsverfahren wurde die Menge an Staub bestimmt, die bei nicht funktionalisiertem bzw. erfindungsgemäß funktionalisiertem Graphen-Material entstand. Es wurden die Standardeinstellungen laut DIN 55992-1 gewählt:
- 30 Umdrehungen/min
- 20 L/min Luftstrom
- 100 L
- 5 min

Zunächst wurden Bestimmungen der Staubentwicklung mit verschiedenen Mengen an nicht funktionalisiertem Graphen-Material Graphenoxid vorgenommen. Bei einer größeren Menge an Graphen-Material, gleichbedeutend mit einer höheren Einwaage, wurde mehr Staub freigesetzt, was sich positiv auf den experimentellen Fehler auswirkte. Doch wurde beobachtet, dass es bei einer zu hohen Einwaage zu einer Blockade des Luftweges im Gerät kommen konnte, so dass die freigesetzte Staubmenge unterschätzt wurde. Solche Resultate wurden verworfen. Die Ergebnisse der Bestimmung sind in **Tabelle 1** gezeigt.

**Tabelle 1. Staubentwicklung an nicht funktionalisiertem Graphen-Material.**

| Einwaage vorher in g | Masse in g im Filter | % Staub |
|---|---|---|
| 5,0 | 0,1692 | 3,4 |
| 7,5 | 0,2223 | 3,0 |

Das nicht funktionalisierte Graphen-Material setzte bei einer Einwaage von 5 g 3,4% Staub frei und bei 7,5 g Einwaage 3,0% Staub. Dieser Staub wurde jeweils in einem Filter aufgefangen und ausgewogen. Bei beiden Bestimmungen wurden 100 I Luft in der vorgegebenen Zeit durch das Dustmeter gesaugt.

Anschließend wurde die Staubentwicklung an dem erfindungsgemäß funktionalisierten Graphen-Material aus dem Beispiel C bestimmt, und zwar mit Einwaagen von 5 g bzw. von 7,5 g des funktionalisierten Graphen-Materials. Die Ergebnisse sind in **Tabelle 2** gezeigt.

**Tabelle 2. Staubentwicklung an erfindungsgemäß funktionalisiertem Graphen-Material.**

| Einwaage vorher, g | Masse in Filter, g | % Staub | Staubverringerung durch Funktionalisierung |
|---|---|---|---|
| 5,0 | 0,0497 | 1,0 | 68 % (5 g Einwaage) |
| 7,5 | 0,0718 | 1,0 | 68 % (7,5 g Einwaage) |

In diesen Versuchen wurde eine deutlich geringere Masse an Staub im Filter bestimmt, als beim nicht funktionalisierten Graphen-Material. Bei der Messung mit 5 g erfindungsgemäß funktionalisierten Graphen-Materials wurde 1,0% Staub freigesetzt. Im Vergleich mit dem nicht funktionalisierten Graphen-Material entsprach dies einer Reduktion von 68%. Eine analoge Verringerung der Staubfreisetzung um 68% wurde bei einer Einwaage von 7,5 g erzielt.

### 2) Bestimmung der Schütt- und Stampfdichte.

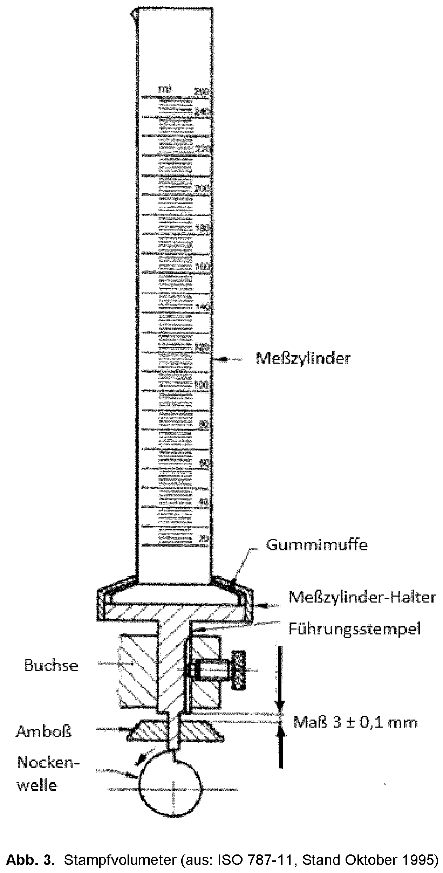

In Anlehnung an DIN 53912 und DIN/ISO 787 wurden die Schütt- und Stampfdichte jeweils des erfindungsgemäß funktionalisierten und nicht funktionalisierten Graphen-Materials mittels eines Stampfvolumeters bestimmt. Das Stampfvolumeter ist in **Abbildung 3** schematisch gezeigt. Das erfindungsgemäß funktionalisierte Graphen-Material wies Agglomerate mit Durchmessern unter 0,5 mm auf. Diese wurden nicht entfernt, weil es sonst zu derart starken Masseverlusten gekommen wäre, dass keine repräsentative Analyse des Bulk-Materials mehr möglich gewesen wäre.

Für die Bestimmung der Schüttdichte wurde jeweils das Material über einen Trichter langsam in einen tarierten 100 ml Meßzylinder gegeben. Nach Ende des Einfüllvorgangs wurde während 1 min gewartet, um Luft entweichen zu lassen, so dass nach dem Entweichen von Luft ein konstanter Füllstand erreicht war. Der Meßzylinder musste dabei in Ruhe verbleiben, und der Füllstand wurde bei Bedarf höchstens mit einem Spatel glatt gestrichen.

Nach der Ablesung des Füllstandes wurde die eingefüllte Masse bestimmt. Die Schüttdichte berechnete sich aus Masse pro Füllvolumen. Die Dichten wurden für jedes Material im Zweifachansatz bestimmt. Für die Bestimmung der Stampfdichte wurden die Messzylinder entsprechend DIN/ISO 787 maschinell 1250-mal aufgestampft.

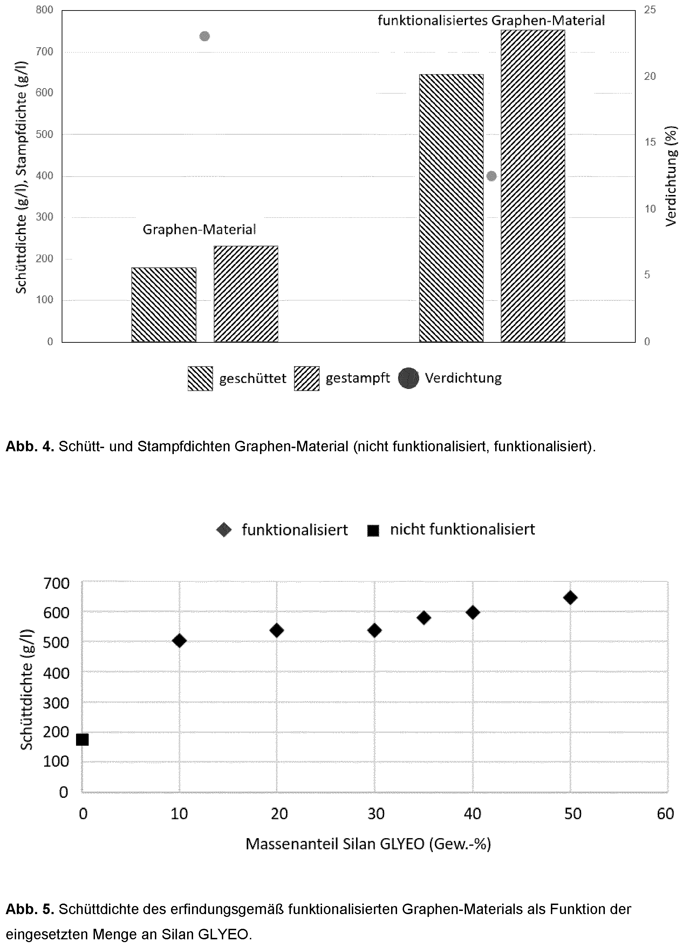

Die Ergebnisse sind in **Abbildung 4** gezeigt. Die Schüttdichte war bei dem erfindungsgemäß mit GLYEO funktionalisierten Graphen-Material mit über 600 g/l mehr als 3-fach höher, als beim nicht funktionalisierten Graphen-Material mit 177 g/l. Auch die Stampfdichte dieses funktionalisierten Graphen-Materials war mit über 700 g/l mehr als 3-fach höher als beim unbehandelten Graphen mit 230 g/l. Das erfindungsgemäße Verfahren hat also dazu geführt, dass kompakteres Graphen-Material vorlag. Außerdem ist in **Abbildung 4** mit "Verdichtung" der Quotient aus Schütt- und Stampfdichte, in Prozent, angegeben.

Die **Abbildung 5** zeigt die Wirksamkeit des erfindungsgemäßen Verfahrens anhand der Abhängigkeit der Schüttdichte des erfindungsgemäß funktionalisierten Graphen-Materials von der Menge eingesetzten Silans GLYEO.
Hierbei wurde der Massenanteil des Silans GLYEO zwischen 10 und 50 Gew.-% verändert. Beginnend bei einer Schüttdichte von 502 g/l beim Einsatz von 10 Gew.-% GLYEO, wurde diese auf einen Wert von etwa 650 g/l beim Einsatz von 50 Gew-% GLYEO gesteigert gefunden. **Abbildung 5** lässt einen linearen Zusammenhang zwischen dem Anteil an GLYEO und der Schüttdichte erkennen.

### 3) Bestimmung der Fließfähigkeit.

Um den Einfluss der erfindungsgemäßen Funktionalisierung des Graphen-Materials auf dessen Fließfähigkeit zu bestimmen, wurde der *Revolution Powder Analyzer,* Model Rev2015, der Firma PS Prozesstechnik GmbH verwendet. Dabei war, wie **Abbildung 6** zeigt, eine definierte Menge in eine Drehtrommel gegeben worden, und es wurde mittels Kamera bestimmt, ab welchem Winkel das Material Lawinen bildete. Je kleiner der Lawinenwinkel (*ava,h*) der von den Partikeln gebildeten Oberfläche zur Horizontalen (h) zum Zeitpunkt der Lawinen war, desto besser war die Fließfähigkeit des Materials. Der Lawinenwinkel wurde von (*ava*) zur Horizontalen (h) in der mathematisch positiven Richtung gemessen. Die Arbeitsweise des Powder Analyzers sowie damit erfasste Messgrößen sind dem Fachmann bekannt. Einzelheiten zur Bestimmung der Fließfähigkeit können beispielsweise dem Aufsatz von Amado, "Advances in SLS powder characterization", 22nd Annual International Solid Freeform Fabrication Symposium - An Additive Manufacturing Conference, SFF, 2011, pp. 438-452, entnommen werden.

Entsprechend den Herstellerangaben wurden 100 ml des Materials in einer PET-Trommel eingesetzt, die einen Durchmesser von 100 mm aufwies. Beim Abmessen des Füllvolumens wurde den Vorgaben entsprechend gerüttelt, jedoch nicht gestampft, um Luftpolster zu entfernen.

Die Messparameter des Fließfähigkeitsprogrammes entsprachen den Standardeinstellungen für dunkles Pulver:
- 0,5 rpm
- 150 Lawinenabgänge
- Avalanche Threshold 0,65 %
- Kamera: Shutter Speed 6 ms, Gain 6 db (schwarzes Pulver), 10 frames per second

In **Abbildung 7** sind die durchschnittlichen Winkel der jeweiligen Pulveroberfläche aus 150 Lawinen für erfindungsgemäß hergestellte Graphen-Materialien mit verschiedenen Anteilen an Silan GLYEO gezeigt. Je größer der Winkel zu Beginn von Lawinen war, desto schlechter war das Material geflossen. Es zeigte sich, dass die Fließfähigkeit mit der Zugabe von 0 bis 30 Gew.-% Silan konstant blieb.
Oberhalb von 30 Gew.-% Silan GLYEO sank der Lawinenwinkel mit steigendem Anteil von Silan von etwa 60° auf unter 50° bei 50 Gew.-% Silan GLYEO ab. Mit der Zugabe von mehr als 30 Gew.-% Silan GLYEO war demnach die Fließfähigkeit deutlich verbessert gefunden.

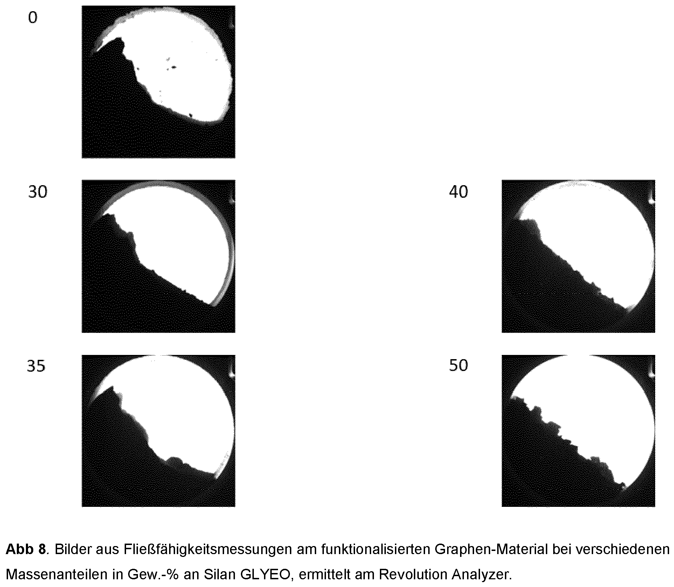

Die **Abbildung 8** zeigt Kamera Aufnahmen am *Revolution Powder Analyzer* in dem Moment der Bildung von Lawinen des jeweils erfindungsgemäßen funktionalisierten Graphen-Materials bei verschiedenen Massenanteilen Silan GLYEO.

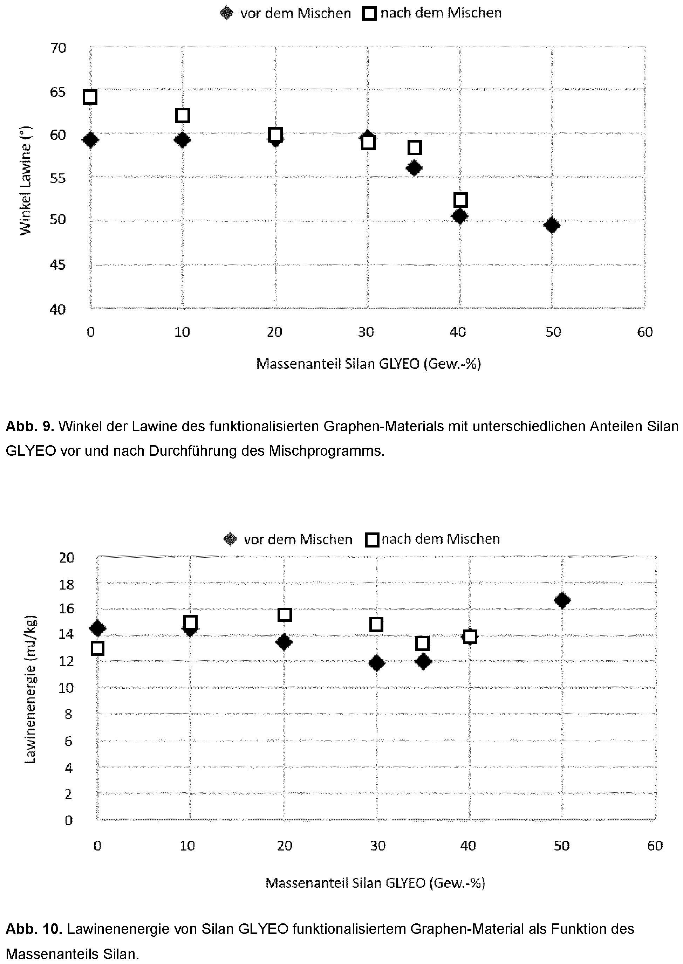

Um die Stabilität der erfindungsgemäß hergestellten Graphen-Materialien nach längerem Handling zu untersuchen, wurde das 5,8 Stunden dauernde Mischprogramm des Revolution Analyzers angewandt. In diesem Programm wechselten sich in 150 Zyklen schnellere Mischperioden bei 5 rpm für 20 s mit langsameren bei 1 rpm für 120 s ab.
Nach Ablauf des Programmes wurde erneut die Fließfähigkeit wie oben beschrieben bestimmt. Wie in **Abbildung 9** gezeigt, stieg der durchschnittliche Winkel der Lawine des nicht funktionalisierten Graphen-Materials deutlich von 59 auf 64° an, was auf eine schlechtere Fließfähigkeit hinwies.
Im Gegensatz dazu erhöhten sich die Lawinenwinkel des erfindungsgemäß mit Silan GLYEO funktionalisierten Graphen-Materials nach dem Langzeitmischen gar nicht oder kaum.

Ein weiterer Indikator für die Fließfähigkeit des Graphen-Materials ist die Lawinenenergie, welche ebenfalls ermittelt wurde. Je niedriger die Energie der abgehenden Lawinen war, bei zugleich geringster Änderung der Lawinenenergie als Funktion des Massenanteils Silan, desto besser war die Fließfähigkeit des Materials.

In **Abbildung 10** ist ein Optimum bei etwa 30 bis 35 Gew.-% Silan GLYEO zu erkennen.

## Patentansprüche

1. Verfahren zur Funktionalisierung von Graphen-Material,
**dadurch gekennzeichnet,**
**dass** Graphen-Material mit zumindest einem Silan zumindest teilweise umgesetzt wird,
wobei das zumindest eine Silan die Struktur Y-Si(OR¹)(OR²)(OR³) hat und
Yein verzweigter oder unverzweigter Alkyl-, Olefin- oder aromatischer Rest,
eine Kombination dieser Reste, oder eine funktionelle organische Gruppe,
ausgewählt aus
Carboxy-, Carbonyl-, Hydroperoxycarbonyl-, Halogenyl-, Sulfo-, Sulfino-, Sulfeno-, Cyan-, Formyl-, Oxo-, Thioxo-, Hydroxy-, Amino-, Imino-, Hydrazino-, Epoxy-, Sulfanyl-, Fluoro-, eine Kombination dieser Gruppen, oder
eine Kombination aus Alkyl-, Olefin- oder aromatischem Rest und dieser funktionellen organischen Gruppe, ist,
und
R¹, R², R³ verzweigte oder unverzweigte Alkyl-, Olefin- oder aromatische, paarweise gleiche oder ungleiche Reste sind,
und die zumindest teilweise Umsetzung während einer Durchmischung des oder der Silane mit dem Graphen-Material durchgeführt wird.

2. Verfahren nach Anspruch 1, wobei zwei oder mehr Silane eingesetzt werden, deren Y oder R¹, R², R³ paarweise gleich oder ungleich sind.

3. Verfahren nach Anspruch 1, wobei das zumindest eine Silan ausgewählt ist aus 3-Glycidyloxypropyltriethoxysilan [GLYEO], 3-Aminopropyltriethoxysilan [AMEO], Glycidyloxypropyltrimethoxysilan [GLYMO], 3-Aminopropyltrimethoxysilan [AMMO] oder einem Gemisch aus diesen Silanen.

4. Verfahren nach einem der vorhergehenden Ansprüche, wobei die Summe der Massenanteile des zumindest einen Silans im Bereich von 0,1 bis 70 Gew.-%, vorzugsweise von 5 bis 50 Gew.-%, weiterhin bevorzugt von 25 bis 40 Gew.-%, ist,
und wobei
die Summe der Massenanteile des oder der Silane und des Graphen-Materials 100 Gew.-% beträgt.

5. Verfahren nach einem der vorhergehenden Ansprüche, wobei die zumindest teilweise Umsetzung bei einer Temperatur im Bereich von 50 °C bis 150 °C, bevorzugt in einem Bereich von 80 °C bis 110 °C, durchgeführt wird.

6. Verfahren nach einem der vorhergehenden Ansprüche, wobei für die Durchmischung ein Mischgranulator, ein Gefäß mit Mahlkugeln, eine Kugelmühle, ein Drei-Walzen-Stuhl, ein Rührer oder ein mit Schaufeln ausgestattetes Gefäß eingesetzt wird.

7. Funktionalisiertes Graphen-Material, erhalten nach einem Verfahren gemäß einem der Ansprüche 1 - 6.

8. Funktionalisiertes Graphen-Material nach Anspruch 7, **gekennzeichnet durch** eine Schüttdichte von 300 g/l bis 900 g/l, vorzugsweise von 500 g/l bis 800 g/l, und/oder durch
eine Stampfdichte von 300 g/l bis 900 g/l, vorzugsweise von 500 g/l bis 800 g/l, und/oder durch
eine Verringerung der Staubentwicklung um 50 % bis 80 %, vorzugsweise um 55 % bis 75 %.

9. Verwendung des funktionalisierten Graphen-Materials gemäß Anspruch 7 oder 8 als Füllstoff, als Korrosionsschutz in Coatings, für Anti-Icing, als Aktivmaterial und/oder Elektrodenmaterial in Batterien, in Kompositmaterialien und/oder Schäumen zur Veränderung von
mechanischen, thermischen, elektrischen und tribologischen Eigenschaften sowie des Flammschutzes, in Reifenkautschuk, in Getriebe- und/oder Motorenöl, bei der Metallbearbeitung, in Membranen.

10. Verwendung nach Anspruch 9 in thermoplastischen Kunststoffen, ausgewählt aus Standard-Thermoplaste, vorzugsweise PE, PP, PS, PVC,
in technischen Thermoplasten,
vorzugsweise PET, PMMA, PC, POM, PA,
in Hochleistungs-Thermoplasten,
vorzugsweise PPS, PEEK, PES,
in Copolymerisaten, Elastomeren,
vorzugsweise Siliconen, weiter bevorzugt RTV, HTV, LSR,
in Polyurethanen, Kautschuken,
vorzugsweise SBR, BR, Naturkautschuk,
in Duromeren,
vorzugsweise Polyurethanen, Polyesterharzen, Phenolharzen, Epoxidharzen, Acrylatharzen,
Silikonharzen,
in Lösemitteln,
vorzugsweise aprotisch-unpolaren, aprotisch-polaren, protischen Lösemitteln,
in Ölen,
vorzugsweise Mineralölen, Silikonölen, Prozessierölen.
